# EUROPÄISCHE PATENTSCHRIFT

(11) **EP 4 014 211 B1**
(45) Veröffentlichungstag und Bekanntmachung des Hinweises auf die Patenterteilung: **05.03.2025**
(21) Anmeldenummer: 20754154.1
(22) Anmeldetag: 16.07.2020
(51) Int. Cl.: G07D 7/1205, G07D 7/202

(54) **GEGENSTAND, DER FLUORESZENZ-MARKERARTIKEL UMFASST, UND VERFAHREN ZUR IDENTIFIZIERUNG DESSELBEN**
OBJECT WHICH COMPRISES FLUORESCENCE MARKER ARTICLES AND METHOD FOR IDENTIFYING SAME
OBJET QUI COMPREND DES PARTICULES DE MARQUEURS DE FLUORESCENCE ET SON PROCÉDÉ D'IDENTIFICATION

(30) Priorität: 15.08.2019 DE 102019122010
(43) Veröffentlichungstag der Anmeldung: 22.06.2022
(73) Patentinhaber: Polysecure GmbH, 79111 Freiburg (DE)
(72) Erfinder: MOESSLEIN, Jochen, 79111 Freiburg (DE); HEINRICH, Jürgen, 79111 Freiburg (DE); KATUS, Philip, 79111 Freiburg (DE); KIRCHENBAUER, Daniel, 79111 Freiburg (DE)
(74) Vertreter: Erbacher, Martin
(86) Internationale Anmeldenummer: PCT/DE2020/100626
(87) Internationale Veröffentlichungsnummer: WO 2021/027989

(56) Entgegenhaltungen:
- DE-A1- 102010 026 627
- DE-A1- 102010 026 627
- DE-A1- 102017 008 970
- DE-A1- 102017 008 970
- US-A1- 2019 184 724
- US-A1- 2019 184 724

## Beschreibung

Die vorliegende Erfindung betrifft einen Gegenstand, der Fluoreszenz-Markerpartikel umfasst, und ein Verfahren zum Identifizieren dieses Gegenstands.

### TECHNISCHER HINTERGRUND

Von der Erzeugung einer Ware über die Logistik bis zur Auslieferung an den Kunden und darüber hinaus ist eine erfolgreiche Produkt-Identifikation essentiell. Hierbei haben sich vielfältige Verfahren etabliert: In fernen Zeiten die Gravur, welche sich beispielsweise in den Steinmetzzeichen großer alter Bauwerke wiederfindet, in der heutigen Zeit das bewährte Label mit Strich- oder Matrix-Code (BAN oder QR), und neuerdings zusätzlich elektronische Verfahren, wie zum Beispiel das RFID-Chips. Die Identifikatoren ,Gravur' und ,Label' haben gemeinsam, dass sie visuell sichtbar und daher verhältnismäßig leicht kopierbar sind. Ferner verändern bzw. decken sie die Oberfläche des zu bezeichnenden Produkts ab. RFID-Chips können zwar versteckt und unsichtbar angebracht werden, allerdings sind die Chips verhältnismäßig teuer, insbesondere wenn sie fälschungssicher sein sollen.

In vielen bekannten Veröffentlichungen werden Fluoreszenzmarker zur Authentifizierung von Produkten, d.h. zur Echtheitskontrolle verwendet, wie zum Beispiel in DE000010322794A1 zu einem Sensor für die Echtheitserkennung eines lumineszierenden Sicherheitsmerkmals. Bei der Partikellage und deren Detektion wird dabei von einer ebenen und flächigen Verteilung ausgegangen. Gleichermaßen sind in der DE102017004496A1 Lumineszenz-Pigmente offenbart, die in eine Druckfarbe integriert sind, um ein Druckerzeugnis, wie z.B. ein Geldschein, vor Fälschung zu schützen. Dabei werden die Vorteile der Fluoreszenz-Partikel wie ihre hohe Lumineszenz-Intensität und ihre hohe chemische Stabilität hervorgehoben, was auch in der Patentschrift DE102014011383A beschrieben wird. Die DE10 2010 026627 A1 offenbart die Prüfung eines Gegenstandes basierend auf einer zufälligen Verteilung von Fluoreszenz-Markerpartikeln. Die Partikel sind in einem Teilvolumen eines Aufklebers zufällig verteilt.

Es ist daher die Aufgabe der vorliegenden Erfindung, einen Gegenstand und ein Verfahren zu dessen Identifizierung bereitzustellen, welche die Nachteile des Stands der Technik überwinden, insbesondere die eindeutige, fälschungssichere Identifizierung von Gegenständen ermöglichen, ohne dass das optische Erscheinungsbild des Gegenstands beeinträchtigt wird.

### BESCHREIBUNG DER ERFINDUNG

Diese Aufgabe wird gelöst durch einen Gegenstand, umfassend Fluoreszenz-Markerpartikel, wobei die Fluoreszenz-Markerpartikel im gesamten Volumen des Gegenstands oder in einem Teil des Volumens des Gegenstands verteilt sind und die Fluoreszenz-Markerpartikel in einer zufälligen Verteilung vorliegen; das Volumen, in dem die Fluoreszenz-Markerpartikel verteilt sind, ein Subvolumen umfasst; das Subvolumen zumindest einen Teil der Fluoreszenz-Markerpartikel enthält; das Subvolumen zumindest teilweise durchlässig ist für elektromagnetische Strahlung mit einer Wellenlänge im sichtbaren Bereich und/oder im nahen Infrarotbereich und/oder im UVA Bereich; und ein Teil der Oberfläche des Subvolumens mit einem Teil der Oberfläche des Gegenstands identisch ist.

Fluoreszenz-Markerpartikel im Sinne der vorliegenden Erfindung sind insbesondere solche Fluoreszenz-Markerpartikel, die im nahen Infrarotbereich und/oder im UV-Bereich, vorzugsweise UVA, anregbar sind und im sichtbaren Bereich und/oder im (bevorzugt) nahen, Infrarotbereich emittierend sind. Hierbei wird Bezug genommen auf die folgenden Anregungswellenlängen: UVA (380-315 nm), NIR (IR-A 780 nm-1.400 nm, vorzugsweise 980 nm), sichtbares Licht VIS (380-780 nm), UV (380-100 nm) und IR (780 nm-1 mm). Die Verwendung solcher Fluoreszenz-Markerpartikel ermöglicht den Nachweis mit einer handelsüblichen Kamera, womit die Emission ohne besonderen Aufwand sowohl im VIS- als auch im NIR-Bereich nachgewiesen werden kann. Geeignete Partikel sind dem Fachmann wohlbekannt, etwa aus den Druckschriften WO 2017/220079 A1 oder DE 10 2014 105 846 A1.

Die Fluoreszenz-Markerpartikel sind entweder im gesamten Volumen des Gegenstands oder lediglich in einem Teil des Volumens des Gegenstandes verteilt. Sie liegen in diesem Gesamt- oder Teilvolumen in einer zufälligen Verteilung vor. Erfindungsgemäß ist vorgesehen, dass das Gesamt- oder Teilvolumen, in dem die Fluoreszenz-Markerpartikel vorhanden sind, ein Subvolumen umfasst. Das Subvolumen ist hierbei ein abgrenzbarer Teil des Volumens, in dem die Fluoreszenz-Markerpartikel verteilt sind. Auch in diesem Subvolumen liegen die Fluoreszenz-Markerpartikel in einer zufälligen Verteilung vor. Die zufällige räumliche Partikelverteilung in dem Subvolumen ermöglicht eine eindeutige Identifikation des Gegenstands. Details zu dieser eindeutigen Identifikation werden im weiteren Text im Zusammenhang mit dem erfindungsgemäßen Verfahren beschrieben.

Es kann vorgesehen sein, dass die Fluoreszenz-Markerpartikel in dem Volumen bzw. dem Teil des Volumens des Gegenstands, gleichmäßig verteilt sind. In diesem Sinne bedeutet gleichmäßig nicht, dass die Partikel regelmäßig angeordnet sind. Vielmehr kann vorgesehen sein, dass in der gleichen Volumeneinheit annähernd die gleiche Menge an Partikeln vorhanden ist. Innerhalb dieser bestimmten Volumeneinheit ist die Anordnung der Partikel dann zufällig.

In einer Ausführungsform kann vorgesehen sein, dass die Fluoreszenz-Markerpartikel im nahen Infrarotbereich und/oder im UVA Bereich anregbar sind und im sichtbaren Bereich und/oder im nahen Infrarotbereich emittierend sind.

In einer weiteren Ausfiihrungsform kann vorgesehen sein, dass die Fluoreszenz-Markerpartikel zumindest zwei verschiedene Arten von Fluoreszenz-Markerpartikeln umfassen, die sich hinsichtlich ihrer Größe und/oder Form und/oder chemischen Zusammensetzung voneinander unterscheiden. In diesem Zusammenhang kann vorgesehen sein, dass die chemische Zusammensetzung mit der Fluoreszenzemission korreliert.

Gemäß einer Ausführungsform kann vorgesehen sein, dass der Gegenstand eine Ware und/oder eine Ummantelung umfasst, wobei die Ummantelung die Ware zumindest teilweise einschließt. In diesem Zusammenhang kann vorgesehen sein, dass die Ummantelung die Ware zumindest teilweise einschließt und die Fluoreszenz-Markerpartikel in der Ware und/oder der Ummantelung oder einem Teil der Ware und/oder der Ummantelung verteilt sind. Erfindungsgemäß kann ausdrücklich auch vorgesehen sein, dass der Gegenstand der vorliegenden Erfindung eine Ummantelung ist, etwa ein Verpackungsmaterial, eine Kiste etc. in die eine Ware, die nicht zum Gegenstand gehört, eingebracht sein kann. Erfindungsgemäß kann ebenfalls vorgesehen sein, dass der Gegenstand eine Kombination aus Ummantelung und Ware umfasst. Alternativ kann vorgesehen sein, dass der Gegenstand die Ware selbst ist.

In einer Ausführungsform kann vorgesehen sein, dass die Fluoreszenz-Markerpartikel in der Ummantelung oder einem Teil derselben verteilt sind und das Subvolumen ein Teil des Volumens der Ummantelung ist.

In einer weiteren Ausführungsform kann vorgesehen sein, dass die Fluoreszenz-Markerpartikel einen mittleren Durchmesser im Bereich von 0,1 µm bis 500 µm, vorzugsweise 2 µm bis 200 µm, besonders bevorzugt 20 µm bis 50 µm, haben.

In einer weiteren Ausführungsform kann vorgesehen sein, dass Partikel unterschiedlicher Größe verwendet werden. Beispielsweise kann vorgesehen sein, dass folgende mittlere Durchmesser für die verschiedenen Partikel vorgesehen sein können: 25 µm, 32 µm, 45 µm, 63 µm, 75 µm, 90 µm, 150 µm und 250 µm. Die einzelnen Partikel der jeweiligen Fraktionen können durch ein einfaches und kostengünstiges Siebverfahren separiert werden. Alternativ kann vorgesehen sein, dass bereits geeignete Partikel unterschiedlicher Größe synthetisiert werden. Schließlich ist die passende Partikelgröße von der Fläche des Identifikationszugangsbereichs und der Pixelauflösung des Kamerasystems abhängig. Die kleineren Partikelgrößen eignen sich für Anwendungen wie Folien, Laminate oder Blister-Verpackungen, ferner für elektronische Bauelemente wie Leuchtdioden zur LED-Chip-Binning-Steuerung etc. die Größeren für Gehäuse und Behälter usw. Als einfachstes und kostengünstigstes Ausführungsbeispiel wäre die Nutzung einer 0,1MPixel-Kamera (320×240 Pixel, sog. QVGA - das derzeit kleinste handelsübliche Kamerachip-Format) denkbar (Größere Formate wären z.B. VGA, SVGA, XGA, etc). Durch die Faustformel, einen idealisierten Partikel mit 3×3 Kamerapixeln und einem 2-Pixel-Rand eindeutig zu erfassen, ergibt sich die Partikelbild-Objektbreite von 7 Pixeln. Angewendet auf die (kleinere) Kamerabild-Höhe lassen sich 34 Partikel aneinanderreihen, und umgerechnet auf ein Identifikationsfenster von 2×2mm ergibt sich dadurch eine Partikelgröße von 60µm. Ausgehend von diesem Beispiel lassen sich größere Identifikationsfenster definieren, welche später in der Anwendung zuverlässig aufgefunden bzw. einer Kamera positionsgenau angefahren werden können. Ebenso kann umgekehrt über eine festgelegte Minimal-Partikelgröße und einem vorgegebenen Identifikationsfender die erforderliche Kameraauflösung errechnet werden.

In einer weiteren Ausführungsform kann vorgesehen sein, dass die Fluoreszenz-Markerpartikel geeignet sind, nach Anregung mit einer Infrarotquelle mindestens zwei verschiedene Emissionslinien im sichtbaren Bereich und/oder im nahen Infrarotbereich zu emittieren. Die Emissionslinien können in diesem Zusammenhang Einzelspektralfarben oder aber Emissionswellenlängenbereiche sein. Vorzugsweise sind in diesem Zusammenhang Fluoreszenz-Markerpartikel vorgesehen, die bei ca. 470 nm, 550 nm, 670 nm (vis) und 800 nm (NIR), jeweils ± 20 nm emittieren.

Gemäß einer weiteren Ausführungsform kann vorgesehen sein, dass die Fluoreszenz-Markerpartikel in dem Subvolumen in zumindest zwei unterschiedlichen Ebenen angeordnet sind. Eine Anordnung der Fluoreszenz-Markerpartikel in zumindest zwei unterschiedlichen Ebenen des Subvolumens kann beispielsweise durch Stapelung, Laminierung, 2K-Spritzguß und andere aus dem Stand der Technik bekannte Verfahren erreicht werden.

In einer Ausführungsform kann vorgesehen sein, dass das Subvolumen von zumindest einem Teil des übrigen Gegenstands optisch nicht unterscheidbar ist. In diesem Zusammenhang bedeutet "optisch nicht unterscheidbar", dass die Oberflächen-, Farb- und/oder Materialeigenschaften gleich sind und/oder der optische Brechungsindex der Materialien gleich ist oder sich um nicht mehr als ± 15% unterscheidet.

In einer weiteren Ausführungsform kann vorgesehen sein, dass das Subvolumen eine Dicke von 0,5 µm bis 500 µm, alternativ 0,5 mm bis 5mm hat. Gemäß der Erfindung ist vorgesehen, dass das Subvolumen an der Oberfläche des Gegenstands angeordnet ist, d.h., dass ein Teil der Oberfläche des Subvolumens mit einem Teil der Oberfläche des Subvolumens mit einem Teil der Oberfläche des Gegenstands identisch ist. Die Dicke des Subvolumens gemäß der vorangehenden Ausführungsform wird ausgehend von dieser gemeinsamen Oberfläche zum Mittelpunkt des Gegenstands hin gemessen. Ein Dickenbereich von 0,5 µm bis 500 µm in diesem Zusammenhang ist etwa dann vorgesehen, wenn der Gegenstand eine Folie, ein Band, eine Klebeschicht etc. ist. Eine Dicke von 0,5 mm bis 5 mm kann insbesondere dann vorgesehen sein, wenn der Gegenstand ein Gehäuse, eine Blende, ein Einsatz, ein Behälter, ein Träger, ein Produkt, eine Ware, etc. ist.

In einer Ausführungsform kann vorgesehen sein, dass das Subvolumen transparent, transluzent oder mit einem Farbstoff eingefärbt ist. In diesem Zusammenhang bezieht sich der Begriff "Transparenz" auf eine Oberfläche, die glatt ist und eine geringe Oberflächenrauhigkeit hat (z.B. PPMA oder PC glasklar). "Transluzent" bedeutet milchig streuend, entweder durch integrierte Streupartikel oder über die Oberflächenrauhigkeit (z.B. Milchglas). "Eingefärbt" bedeutet in diesem Zusammenhang, dass dem Subvolumen ein Farbstoff beigefügt wird, etwa ein Glas mit chemischen Zusätzen.

In einer weiteren Ausführungsform kann vorgesehen sein, dass der Gegenstand ferner Markierungen umfasst, die relativ zu dem Subvolumen angeordnet sind. Hinsichtlich der Markierungen kann vorgesehen sein, dass die Markierungen durch ein Bedrucken und/oder Oberflächen-Kontur-Erhebung oder -Vertiefung an dem Gegenstand angebracht sind. Dies dient der Justierung eines Erfassungsgeräts zur Partikeldetektion, d.h. der Bestimmung der relativen Anordnung der in dem Subvolumen angeordneten Fluoreszenz-Markerpartikel. Die Markierung kann insbesondere zumindest einen Referenzpunkt umfassen, der es erlaubt, den Gegenstand so zu positionieren, dass mit Hilfe eines geeigneten Erfassungsgeräts die Emission, und damit einhergehend die Position, der Fluoreszenz-Markerpartikel bestimmt werden kann.

In einer weiteren Ausführungsform kann vorgesehen sein, dass das Volumenverhältnis mittleres-Teilchenvolumen:Subvolumen mindestens 1:20 ist. In diesem Zusammenhang bedeutet "mindestens", dass sich das Volumenverhältnis zugunsten des Subvolumens (beispielsweise 1:25, 1:30 etc.) verschieben kann. Das folgende Gedankenmodell dient als Beispiel für die Ermittlung des Volumenverhältnisses: Ein ,Partikel' welcher idealisiert aus 9 (3 × 3 gestapelten) gedachten Stein-Würfeln besteht wird mittig in ein Volumen von 7 × 7 × 3 gedachten Glaswürfeln integriert. Die Anordnung ist auf eine 1-zu-1-Pixel-Würfel-Identifikation mit einer Kamera ausgelegt, welche die 9 Partikelwürfel und die jeweils umliegenden zwei Glaswürfelreihen lotrecht zur 7x7-Glaswürfelfläche erfasst. Durch dieses Modell ergibt sich ein Minimal-Volumenverhältnis von ca. 9:147 = 1:17 . Die üblichen Volumenverhältnisse können bis zu zehn bis einstelligen ppm-Werten reduziert sein, so dass statistisch nur noch ein Partikel im Subvolumen vorhanden ist. In der Praxis stellt man natürlich ein statistisch sinnvolles, dazwischenliegendes Verhältnis ein. Das eigentliche Ziel der Verhältniszahl ist die ausreichende Separation der Partikel für die spätere Identifikation und die Vermeidung der Partikel-Überlagerung, sowie bei Variation der Verhältniszahl die Erzielung einer möglichst großen unterscheidbaren Partikelanordnungswahrscheinlichkeit aus der sich dann der Variantenumfang des FMCC (Fluoreszenzmarker Charakterisierungs-Code) ableitet.

Gemäß einer Ausführungsform kann vorgesehen sein, dass die Außenkontur des Subvolumens viereckig, quadratisch, rund oder dreidimensional freiförmig ist.

In einer weiteren Ausführungsform kann vorgesehen sein, dass die Ware und die Ummantelung miteinander verbunden sind.

Gemäß einer weiteren Ausführungsform kann vorgesehen sein, dass die Ummantelung nicht zerstörungsfrei von der Ware getrennt werden kann.

In einer weiteren Ausführungsform kann vorgesehen sein, dass die Ummantelung von der Ware lösbar ist. In einer solchen Ausführungsform ist der Gegenstand etwa eine Verpackung, ein Behältnis, ein Träger, eine Box etc.

Gemäß einer weiteren Ausführungsform kann vorgesehen sein, dass die Ummantelung die Ware nur teilweise einschließt. In einer solchen Ausführungsform ist der Gegenstand etwa ein Verpackungsband, eine Blende, ein Einsatz etc.

In einer weiteren Ausführungsform kann vorgesehen sein, dass sowohl die Ummantelung als auch das Subvolumen transparent sind. In diesem Zusammenhang bedeutet transparent, dass der optische Brechungsindex der Materialien vorzugsweise gleich ist oder sich um nicht mehr als ± 15% unterscheidet.

Die Aufgabe wird ferner gelöst durch ein Verfahren zum Identifizieren eines Gegenstands, umfassend die Schritte: a) Bereitstellen eines erfindungsgemäßen Gegenstands; b) Bestimmen der zufälligen räumlichen Verteilung der Fluoreszenz-Markerpartikel in dem Subvolumen; und c) Abgleichen der bestimmten zufälligen räumlichen Verteilung mit hinterlegten Informationen zu der zufälligen räumlichen Anordnung zur Identifizierung des Gegenstands.

Gemäß einer Ausführungsform kann vorgesehen sein, dass das Bestimmen der zufälligen räumlichen Verteilung der Fluoreszenz-Markerpartikel in dem Subvolumen das opto-sensorische Erfassen einer Emission der Fluoreszenz-Markerpartikel umfasst.

In einer weiteren Ausführungsform kann vorgesehen sein, dass das Abgleichen in Schritt c) das Umwandeln der bestimmten zufälligen räumlichen Verteilung der Fluoreszenz-Markerpartikel in einen für die Verteilung charakteristischen mathematischen Code umfasst.

Gemäß einer weiteren Ausführungsform kann vorgesehen sein, dass zusätzlich zu der zufälligen räumlichen Verteilung die Größe und/oder die Form und/oder die chemische Zusammensetzung der Fluoreszenz-Markerpartikel bestimmt wird, und die so erhaltene Information mit einer entsprechenden hinterlegten Information abgeglichen wird. In diesem Zusammenhang ist vorgesehen, dass die chemische Zusammensetzung mit der Fluoreszenzemission korreliert.

In einer weiteren Ausführungsform kann vorgesehen sein, dass das bestimmen in Schritt b) das Auswerten zumindest eine Emissionslinie umfasst. Die Emissionslinien können dabei Einzelspektralfarben oder aber Emissionswellenlängenbereiche sein. Die Marker emittieren beispielsweise vorzugsweise bei ca. 470 nm, 550 nm, 670 nm (VIS) und 800 nm (NIR), jeweils +/- 20 nm.

In einer weiteren Ausführungsform kann vorgesehen sein, dass zusätzlich zu der zufälligen räumlichen Verteilung eine Emissions-Abklingzeit einzelner Partikel nach einer Deaktivierung durch eine Anregung bestimmt wird.

In einer weiteren Ausführungsform kann vorgesehen sein, dass zu der zufälligen räumlichen Verteilung eine Emissions-Anklingzeit einzelner Partikel bei Aktivierung der Anregung bestimmt wird.

In einer weiteren Ausführungsform kann vorgesehen sein, dass zusätzlich zu der zufälligen räumlichen Verteilung eine Emissionsintensität einzelner Partikel bei Aktivierung einer Anregung bestimmt wird.

Gemäß einer weiteren Ausführungsform kann vorgesehen sein, dass das Bestimmen in Schritt b) die Verwendung einer Kamera, einer Zeilenkamera oder einer Smartphone Kamera umfasst. Die Partikelpositionen, insbesondere die Positionstiefe transversal zur Identifikations-Oberfläche, können dabei mit Hilfe von bekannten Verfahren erfasst werden: Beispielsweise durch ein Stereo-Objektiv, eine Stereokamera, mittels Tiefenschärfe, mit Hilfe von triangulatorischen Verfahren, durch Bewegung der Kamera longitudinal oder geneigt zum Identifikationsfenster oder mit einer Time of Flight Kamera (ToF). Bei der Smartphone-Kamera kann es sich auch um einen Aufsatz (insbesondere bzgl. der Partikelanregung) für die Smartphone-Kamera handeln.

Schließlich kann gemäß einer Ausführungsform vorgesehen sein, dass das Abgleichen in Schritt c) den Abgleich mit einem mathematischen Charakterisierungscode der Fluoreszenz-Markerpartikel, der in einer Speicherdatenbank oder Cloud hinterlegt ist, umfasst.

Der erfindungsgemäß markierte Gegenstand sowie die Identifizierung desselben mit Hilfe des erfindungsgemäßen Verfahrens ermöglicht es, Nachteile des Stands der Technik zu überwinden und insbesondere die folgenden technischen Vorteile zu erreichen.
a) Integration der Fluoreszenz-Markerpartikel (FMP) im Rahmen von bereits erforderlichen Standardproduktionsverfahren möglich, so dass zur Anbringung der des Identifikationsmittels kein zusätzlicher Produktionsschritt und keine zusätzliche Komponente erforderlich ist;
b) Unsichtbare Integration des Identifizierungsmerkmals ohne Beeinflussung der Oberfläche oder des Designs des Gegenstands, der Ware oder des Produkts möglich, aufgrund der geringen Partikelgröße und der geringen weiß-diffusen Tageslicht-Abstrahlcharakteristik;
c) Exorbitante Anzahl an Codierungsmöglichkeiten und Codes für umfangreiches Produktsortiment und hohe Stückzahl von Produkten möglich: durch die Position der Partikel, durch die Variation der Partikelgrößen, durch unterschiedliche Partikel-Farbemissionen, durch unterschiedliche Partikel-Geometrien. Die Begrenzung ist lediglich durch die Fenstergröße und die Kameraauflösung gegeben.
d) Identifikationsmerkmal mit maximalem Kopierschutz und daher maximalem Fälschungsschutz, da es im Gegensatz zu aufgedruckten Barcodes, QR-Codes und dergleichen praktisch unmöglich ist, die zufällige zwei- und dreidimensionale Lage sowie die Eigenschaften der Fluoreszenz-Markerpartikel zu kopieren;
e) Identifikationsmerkmal mit zusätzlichem Fälschungsschutz, da das Merkmal (z.B. die Lage des Musters) und das Identifikationsverfahren (z.B. welche Charakteristik bzw. Informationen der Partikel bewertet werden, wie das mathematische Modell aufgebaut ist) dem Fälscher nicht bekannt sind;
f) Identifikationsmerkmal, bei dem das Identifizierungsfenster (= Subvolumen) sichtbar sein kann, damit das Auffinden des Detektionsbereichs mit dem Detektionsgerät einfach ist;
g) Identifikationsmerkmal, bei dem das Identifizierungsfenster (= Subvolumen) unsichtbar sein kann und variiert werden kann, damit das Kopieren oder Fälschen erheblich erschwert wird;
h) Besonders kontrastreiches Partikelmuster und daher Identifikationsmerkmal, da bei der Verwendung von "Up-Conversion"-FMP und Anregung im NIR keine anderen optischen Signale im VIS erzeugt werden als die Up-Conversion-Fluoreszenz der FMP und alle sowohl synthetisch als auch natürlichen Produktionsmaterialien keine oder keine relevante Up-Conversion-Fluoreszenz zeigen. Jede Stokes-Fluoreszenz ist daher in Bezug auf den Kontrast des Partikelmusters bei weitem schlechter als die Patentgegenständliche Verwendung von Up-Conversion-FMP.
i) Zusätzlich ermöglicht die Verwendung von "Up-Conversion"-FMP durch den hohen Kontrast des Partikelmusters, dass die Partikelmuster selbst bei beschädigten oder zerkratzen Erfassungsbereichs-Oberflächen gemessen und erkannt werden können.
j) Ferner lässt sich die Partikelgröße an die Produkt- bzw. Gegenstandsgröße anpassen. Das Gleiche gilt für das Subvolumen

Im Ergebnis ergeben sich durch das erfindungsgemäße Verfahren folgende allgemeinen Vorteile:
a) Einfache und kostengünstige Identifikationsmarkierung für Gegenstände, Waren oder Produkte
b) Eindeutige und einzigartige Identifikationstechnologie
c) Schnell und bequem auslesbar
d) Günstige Steuer- und Auswertetechnologie

### DETAILLIERTE BESCHREIBUNG DER ERFINDUNG

Im Folgenden soll die Erfindung unter Bezugnahme auf konkrete Ausführungsformen und die Zeichnungen beschrieben werden, ohne dass in diesem Zusammenhang genannte Merkmale notwendigerweise für die Erfindung als wesentlich anzusehen sind. Vielmehr können einzelne Merkmale zusammen mit den oben genannten allgemeinen Merkmalen kombiniert werden. Die folgende Beschreibung dient insbesondere der Erläuterung der Erfindung anhand konkreter Ausführungsformen.
- Fig. 1:: Schematische räumliche Darstellung eines erfindungsgemäßen Gegenstands umfassend Fluoreszenz-Markerpartikel
- Fig. 2:: Schematische Darstellung einer Vorrichtung zur Durchführung des erfindungsgemäßen Verfahrens zur Identifizierung des in Fig. 1 gezeigten Gegenstands;
- Fig. 3:: Flussdiagramm zum schematischen Ablauf des erfindungsgemäßen Verfahrens in einer bevorzugten Ausführungsform.

Fluoreszenz ist eine gängige Technologie, um die Wellenlänge einer Emissionsquelle aus dem Randbereich des sichtbaren Spektrums oder gar außerhalb dieses Bereiches in die ,Seh-Zone' (ca. 380nm-780nm) innerhalb der sog. Hellempfindlichkeitskurve V(λ) zu verschieben. Mit Hilfe von geeigneten fluoreszierenden Farbpigmenten lassen sich sowohl Stokes-Verschiebungen, bei welcher in Bezug auf die Anregungswellenlänge mittels "down-shift" die zurückemittierte Abstrahlungswellenlänge gedehnt abgestrahlt wird und der Anti-Stokes-Verschiebung mittels "up-converting" die Abstrahlungswellenlänge gestaucht emittiert wird, realisieren.

Für die vorliegende Erfindung sind beide Richtungen denkbar: d.h. eine Anregung von "down-shift" -FMP (Fluoreszenzmarker-Partikel) mit einer UV-LED oder eines UV-Lasers oder die Anregung von "up-converting"-FMP mit einer IR-Leuchtdiode oder einem Infrarotlaser. Das ,up-converting' ist hierbei bevorzugt, da dieser Effekt aufgrund seiner ,Unnatürlichkeit' (energetisch höhere Wellenlängen in Bezug zur Anregungswellenlänge zu emittieren) besser detektiert werden kann. Zusätzlich kann damit eine vollständig unsichtbare Detektionsweise umgesetzt werden, durch Verwendung geeigneter FMP, welche sowohl im nahen Infrarot-Spektralbereich (NIR) angeregt werden als auch im NIR-Bereich abstrahlen (z.B. Anregung bei ca. 980nm und Abstrahlung bei 800nm). Durch geeignete Dotierung des Fluoreszenz-Materials lassen sich beliebige Emissionsfarben (im sichtbaren Spektralbereich VIS) generieren. Bei Anregung mit 980nm können so Partikel mit einzelnen oder verschiedenen Emissionsbereichen beispielsweise mit der Peakwellenlänge von 480nm 546nm, 607nm und 758nm unterscheiden werden.

Mit einer handelsüblichen Kamera ist es möglich diese Emissionen ohne besonderen Aufwand sowohl im VIS aber auch im NIR-Bereich nachzuweisen. Weitere Informationen zu den FMP lassen sich neben allgemeinen Veröffentlichungen u.a. aus den WO 2017/220079 A1, DE 10 2014 105 846 A1 einholen.

Die FM-Partikel liegen gewöhnlich nach der nass- und trocken-chemischen Synthese in den Größen von etwas unter 1µm bis zu Partikeln sowie Partikel-Agglomeraten bis mehreren hundert Mikrometern vor. Durch Mahlvorgänge und Siebung lassen sich die benötigten Partikelgrößen separieren.

Mit den ausgewählten Partikeln kann schließlich die Produkt-, Gegenstand- oder Warenummantelung durch handelsübliche und bekannte Prozesse befüllt werden, zum Beispiel durch FMP-Compounding des Mantelmaterials mit Hilfe eines Extruders oder mittels mehrlagiger Stapelung von Folien mit FMP-gefüllten Klebeschichten, ferner durch 3D-Druck mit FMPgefüllter Filamente. Die Ummantelung ist dabei transparent oder transluzent (opak oder milchig durchsichtig) sowohl für UV- über den sichtbaren (VIS) bis zum nahen Infrarot-Spektralbereich (NIR) ausgeführt, um sowohl die Anregung der FMP als auch die opto-sensorische Auswertung zu ermöglichen. Bei der Ummantelung kann es sich um eine Folie handeln (sofern die Materialstärke größer der Partikelgröße gewählt wird), bevorzugt handelt es sich um eine Blister-Verpackung. Weiter ist ein transparentes Gehäuse oder eine Box oder ein sonstiges Behältnis denkbar.

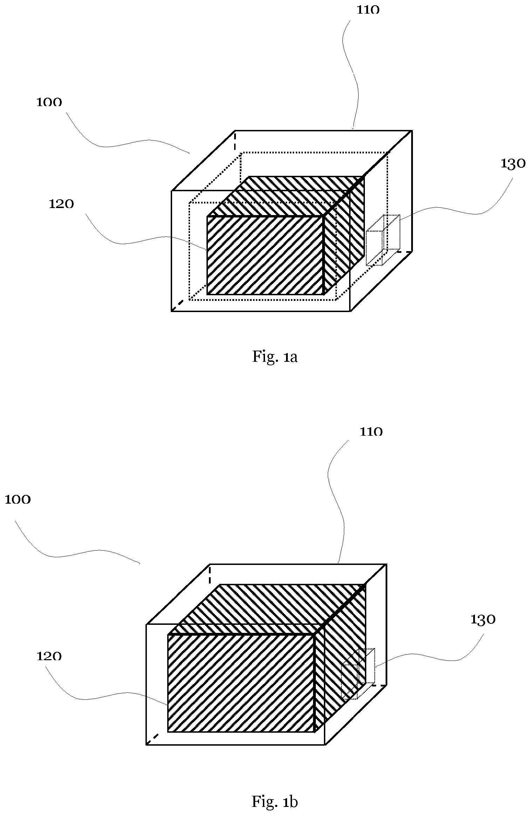

Eine entsprechende Ausführungsform ist in der Fig. 1 gezeigt. In dieser Ausführungsform umfasst der Gegenstand 100 eine Ummantelung 110 sowie eine Ware 120. Die Ware 120 ist von der Ummantelung 110 vollständig umschlossen. In der gezeigten Ausführungsform umfasst der Gegenstand 100, genauer gesagt die Ummantelung 120, ein Subvolumen 130, das einen Teil des Volumens der Ummantelung 120 und damit des Gegenstands 100 darstellt. In dem Gegenstand 100 sind Fluoreszenz-Markerpartikel (nicht gezeigt) in einer zufälligen Anordnung verteilt. Zumindest ein Teil der Partikel ist hierbei in dem Subvolumen 130 in zufälliger Anordnung vorhanden.

Die beschriebene Ummantelung kann fest und nicht zerstörungsfrei lösbar mit der Ware verbunden sein, z.B. durch Verklebung, einem 2K-Spritzgussprozess oder Lamination oder einem 3D-Druckprozess. Ein zugehöriges Beispiel wird in Fig. 1b gezeigt.

Weiter kann die Ummantelung vollständig aber auch partiell die Ware umgeben, z.B ein Umreifungsband für die Warenfixierung auf einer Palette. Zu guter Letzt ist auch denkbar, dass sich die Ummantelung nahezu auf das Subvolumen beschränkt.

Das Subvolumen kann folgende Eigenschaften haben: Es zeichnet sich dadurch aus, dass lediglich in diesem Oberflächen-Ummantelungsbereich eine räumliche Auswertung der volumenförmig zufällig angeordneten Fluoreszenmarker-Partikel erfolgt und der Bereich, bzw. das dahinterliegende Volumen, entweder sichtbar oder unsichtbar, d.h. nicht hervorgehoben, ausgearbeitet ist. Eine sichtbare Ausformung wäre beispielsweise eine Rahmenbedruckung oder eine gezielte Ummantelungs-Oberflächenänderung im Detektionsbereich, z.B. eine Nut, eine Erhebung oder Mulde, ferner eine Einfärbung des volumenförmigen Fensters selbst. Bei der ,unsichtbaren' Ausformung ist das Subvolumen vom umgebenden Ummantelungsbereich nicht zu unterscheiden. Das eigentliche Subvolumen wird lediglich durch die Positionierung des Erfassungsgeräts eingegrenzt und ist daher nur dem Erfassenden, bzw. dem Erfassungsgerät, ,bekannt'. Hierbei können vorhandene Kanten, Konturen, Positionierungshilfen und/oder neben diesen mechanischen Elementen optische Eigenschaften des Gegenstands nahe am, oder entfernt beabstandet vom Subvolumen als Referenz zur Positionierungs-Ausrichtung dienen.

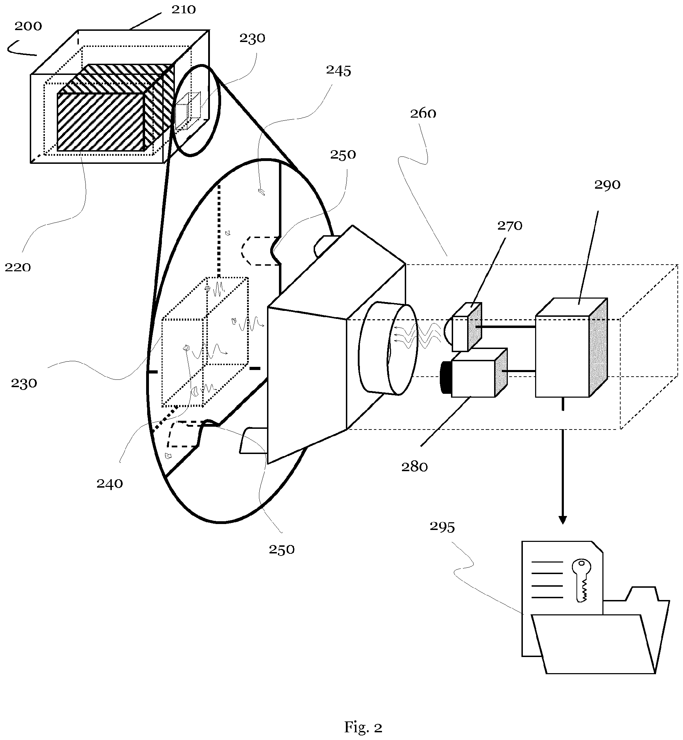

In der Figur 2 ist eine Vorrichtung zur Durchführung des erfindungsgemäßen Verfahrens gezeigt. Identifiziert werden soll ein Gegenstand 200, umfassend eine Ummantelung 210 und eine Ware 220, wobei, entsprechend der Fig. 1, in einem Subvolumen 230 und ggf. im übrigen Volumen des Gegenstands 200 Fluoreszenz-Markerpartikel 240/245 in willkürlicher Anordnung vorliegen. Der in Fig. 2 gezeigte Gegenstand 200 weist ferner Markierungen 250 in Form von Einkerbungen auf, die es ermöglichen, den Gegenstand 200 so anzuordnen, dass die in dem Subvolumen 230 enthaltenen Fluoreszenz-Markerpartikel 240 mittels des Erfassungsgeräts 260 detektiert werden können. Das Erfassungsgerät 260 dient der Ermittlung der zufälligen räumlichen Verteilung der Fluoreszenz-Markerpartikel 240 in dem Subvolumen 230 und beinhaltet eine Anregungsquelle 270, eine Kamera 280 und eine Steuer- und Auswerteeinheit 290. Nach der Bestimmung der zufälligen räumlichen Verteilung der Fluoreszenz-Markerpartikel 240 in dem Subvolumen 230 erfolgt mit Hilfe der Auswerteeinheit 290 die Erzeugung des mathematischen FMCC 295 zum Abgleich mit hinterlegten Daten, um den Gegenstand 200 zu identifizieren.

In einer besonderen Ausführungsform kann dieses Verfahren wie folgt durchgeführt werden. Zunächst wird das Erfassungsgerät mit Hilfe von Positionierungsfedern mit der Ummantelung über dem Subvolumen ausgerichtet. Das Subvolumen kann hierzu sichtbar oder unsichtbar ausgeführt sein. Die Blende des Erfassungsgerätes hält unbeabsichtigtes Fremdlicht ab. Im Subvolumen werden EMP (Emissionspartikel) von der Anregungsquelle im Erfassungsgerät bestrahlt und von einer Kamera ausgewertet (jeweils gesteuert von der Steuer- und Auswerte-einrichtung). Die Kamera, welche eine matrix-basierende CCD-, CMOS-, ToF-, Dual- oder eine Zeilenkamera sein kann, erfasst mit Hilfe bekannter Verfahren, wie Tiefenschärfe-Variation, einer triangulatorischen Vermessung z.B. mit einer transversal variierenden Kamera oder mittels Dual-Kamera, die dreidimensionale Position der FM-Partikel. Zusätzlich detektiert die Kamera die Emissionsfarbe (bzw. den Emissionsfarbbereich) der Partikel, die Größe, die Kontur, und die räumliche Lage bzw. Ausrichtung im Raum.

Mit der Steuer- und Auswerteeinrichtung werden die gemessenen Daten aufgenommen und mit einem mathematischen Algorithmus, der hier nicht weiter erklärt werden soll, in einen eindeutigen Fluoreszenzmarker Charakterisierungs-Code (FMCC) umgewandelt. Der FMCC soll die Partikelkonstellation vollständig beschreiben und gleichzeitig durch die mit dem Verfahren ermöglichte Variations- und kubische Datenfülle fehlertolerant gegenüber mechanischen Einflüssen, wie z.B. Verschleiß der Ummantelungsoberfläche, sein.

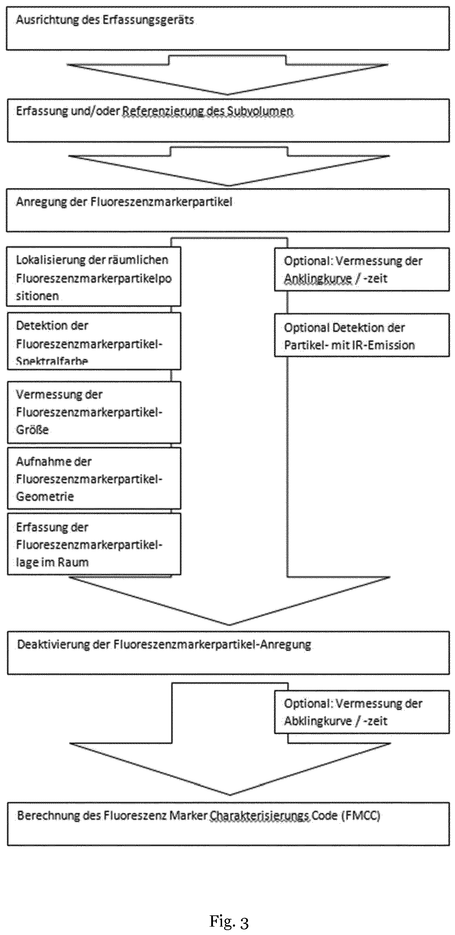

Ein vollständiger möglicher Messablauf des Verfahrens ist in Fig. 3 beschrieben. Wie schon erläutert wird im ersten Schritt die Erfassungseinheit ausgerichtet. Danach wird das Subvolumen referenziert. Entweder bildverarbeitungstechnisch, durch optisch erfassbare Markierungen oder durch mechanische Referenzpunkte. Bei der bildverarbeitungstechnischen optischen Erfassung ist es zweckmäßig zusätzlich eine Beleuchtung im sichtbaren Abstrahlungsspektrum zum Einsatz zu bringen (welche in Skizze 2 nicht explizit ausgeführt wurde). Nach Anregung der EMP mit infrarotem oder/oder ultraviolettem Licht erfolgt die Lokalisierung der räumlichen EMP-Positionen, Detektion der Partikel-Spektralfarbe, Vermessung der EMP-Größe und Geometrie und die Erfassung der EMP-Lage im Raum. Optional ist es möglich, beim Einschalten der Anregungsquelle das lichttechnische Anklingverhalten der EMP ebenfalls auszuwerten. Ebenso kann nach der Deaktivierung der Anregungsquelle das lichttechnische Abklingverhalten erfasst werden. Diese zeitlich exponentiell verlaufenden Leuchteigenschaften der Fluoreszenz-Markerpartikel bei und nach Anregung sind durch entsprechende Dotierung der EMP gezielt einstellbar und können für die Berechnung des FMCC ebenfalls miteinbezogen werden.

Mit Hilfe des FMCC kann schließlich mit den üblichen Technologien die Produktzuordnung, Warenverfolgung (Tracking) sowie Datenverarbeitung und Speicherung durchgeführt werden.

## Patentansprüche

1. Verfahren zum Identifizieren eines Gegenstands, umfassend die Schritte:
a) Bereitstellen eines Gegenstands, umfassend Fluoreszenz-Markerpartikel, wobei
- die Fluoreszenz-Markerpartikel im gesamten Volumen des Gegenstands oder in einem Teil des Volumens des Gegenstands verteilt sind und die Fluoreszenz-Markerpartikel in diesem gesamten Volumen oder in dem Teil des Volumens in einer zufälligen Verteilung vorliegen;
- das Volumen, in dem die Fluoreszenz-Markerpartikel verteilt sind, ein Subvolumen umfasst;
- das Subvolumen zumindest einen Teil der Fluoreszenz-Markerpartikel enthält;
- das Subvolumen zumindest teilweise durchlässig ist für elektromagnetische Strahlung mit einer Wellenlänge im sichtbaren Bereich und/oder im nahen Infrarotbereich und/oder im UVA Bereich; und
- ein Teil der Oberfläche des Subvolumens mit einem Teil der Oberfläche des Gegenstands identisch ist;
b) Positionieren eines Erfassungsgeräts mittels optischer Eigenschaften des Gegenstands und/oder mittels mechanischer Elemente des Gegenstands und/oder mittels Positionierungshilfen, so dass die Fluoreszenz-Markerpartikel in dem Subvolumen mittels des Erfassungsgeräts detektiert werden können;
c) Bestimmen der zufälligen räumlichen Verteilung der Fluoreszenz-Markerpartikel in dem Subvolumen mittels des Erfassungsgeräts; und
d) Abgleichen der bestimmten zufälligen räumlichen Verteilung mit hinterlegten Informationen zu der zufälligen räumlichen Anordnung zur Identifizierung des Gegenstands.

2. Verfahren zum Identifizieren eines Gegenstands nach Anspruch 1, wobei die Fluoreszenz-Markerpartikel zumindest zwei verschiedene Arten von Fluoreszenz-Markerpartikeln umfassen, die sich hinsichtlich ihrer Größe und/oder Form und/oder chemischen Zusammensetzung voneinander unterscheiden.

3. Verfahren zum Identifizieren eines Gegenstands nach Anspruch 1 oder 2, wobei der Gegenstand eine Ware und/oder eine Ummantelung umfasst, wobei die Ummantelung die Ware zumindest teilweise einschließt.

4. Verfahren zum Identifizieren eines Gegenstands nach einem der vorangehenden Ansprüche, wobei die Fluoreszenz-Markerpartikel geeignet sind, nach Anregung mit einer Infrarotquelle mindestens zwei verschiedene Emissionslinien im sichtbaren Bereich und/oder im nahen Infrarotbereich zu emittieren.

5. Verfahren zum Identifizieren eines Gegenstands nach einem der vorangehenden Ansprüche, wobei das Subvolumen von zumindest einem Teil des übrigen Gegenstands optisch nicht unterscheidbar ist.

6. Verfahren zum Identifizieren eines Gegenstands nach einem der vorangehenden Ansprüche, wobei das Subvolumen transparent, transluzent oder mit einem Farbstoff eingefärbt ist.

7. Verfahren zum Identifizieren eines Gegenstands nach einem der Ansprüche 3 bis 6, wobei sowohl die Ummantelung als auch das Subvolumen transparent sind.

8. Verfahren zum Identifizieren eines Gegenstands nach einem der vorangehenden Ansprüche, wobei das Bestimmen der zufälligen räumlichen Verteilung der Fluoreszenz-Markerpartikel in dem Subvolumen das opto-sensorische Erfassen einer Emission der Fluoreszenz-Markerpartikel umfasst.

9. Verfahren zum Identifizieren eines Gegenstands nach einem der vorangehenden Ansprüche, wobei das Abgleichen in Schritt c) das Umwandeln der bestimmten zufälligen räumlichen Verteilung der Fluoreszenz-Markerpartikel in einen mathematischen Code umfasst.

## Claims

1. A method of identifying an article comprising the steps of:
a) providing an article comprising fluorescent marker particles, wherein
- the fluorescent marker particles are distributed in the entire volume of the article or in a portion of the volume of the article and the fluorescent marker particles are present in this entire volume or in said portion of the volume in a random distribution;
- the volume in which the fluorescent marker particles are distributed comprises a sub-volume;
- the sub-volume contains at least a portion of the fluorescent marker particles;
- the sub-volume is at least partially transmissive to electromagnetic radiation having a wavelength in the visible range and/or in the near infrared range and/or in the UVA range; and
- a portion of the surface of the sub-volume is identical to a portion of the surface of the article;
b) positioning a detection device by means of optical properties of the article and/or by means of mechanical elements of the article and/or by means of positioning aids so that the fluorescent marker particles can be detected in the sub-volume by means of the detection device;
c) determining the random spatial distribution of the fluorescent marker particles in the sub-volume by means of the detection device; and
d) matching the determined random spatial distribution with stored information about the random spatial arrangement for identifying the article.

2. The method of identifying an article according to claim 1, wherein the fluorescent marker particles comprise at least two different types of fluorescent marker particles which differ from each other in their size and/or shape and/or chemical composition.

3. The method of identifying an article according to claim 1 or 2, wherein the article comprises a good and/or a covering, wherein the covering at least partially encloses the good.

4. The method of identifying an article according to any one of the preceding claims, wherein the fluorescent marker particles are suited to emit at least two different emission lines in the visible range and/or in the near infrared range upon excitation with an infrared source.

5. The method of identifying an article according to any one of the preceding claims, wherein the sub-volume is optically indistinguishable from at least a portion of the remaining article.

6. The method of identifying an article according to any one of the preceding claims, wherein the sub-volume is transparent, translucent or dyed with a dye.

7. The method of identifying an article according to any one of claims 3 to 6, wherein both the covering and the sub-volume are transparent.

8. The method of identifying an article according to any one of the preceding claims, wherein determining the random spatial distribution of the fluorescent marker particles in the sub-volume comprises opto-sensory detection of an emission of the fluorescent marker particles.

9. The method of identifying an article according to any one of the preceding claims, wherein the matching in step c) comprises converting the determined random spatial distribution of the fluorescent marker particles into a mathematical code.

## Revendications

1. Procédé d'identification d'un objet, comprenant les étapes consistant à :
a) fournir un objet comprenant des particules de marqueur de fluorescence, dans lequel
- les particules de marqueur de fluorescence sont réparties dans tout le volume de l'objet ou dans une partie du volume de l'objet et les particules de marqueur de fluorescence sont présentes dans tout ce volume ou dans cette partie du volume selon une distribution aléatoire ;
- le volume dans lequel les particules de marqueur de fluorescence sont réparties comprend un sous-volume ;
- le sous-volume contient au moins une partie des particules de marqueur de fluorescence ;
- le sous-volume est au moins partiellement perméable à un rayonnement électromagnétique d'une longueur d'onde dans la plage visible et/ou dans la plage du proche infrarouge et/ou dans la plage des UVA ; et
- une partie de la surface du sous-volume est identique à une partie de la surface de l'objet ;
b) positionner un appareil de détection au moyen de propriétés optiques de l'objet et/ou au moyen d'éléments mécaniques de l'objet et/ou au moyen d'aides au positionnement, de telle sorte que les particules de marqueur de fluorescence dans le sous-volume puissent être détectées au moyen de l'appareil de détection ;
c) déterminer la distribution spatiale aléatoire des particules de marqueur de fluorescence dans le sous-volume au moyen de l'appareil de détection ; et
d) ajuster la distribution spatiale aléatoire déterminée par rapport à des informations stockées concernant la répartition spatiale aléatoire pour l'identification de l'objet.

2. Procédé d'identification d'un objet selon la revendication 1, dans lequel les particules de marqueur de fluorescence comprennent au moins deux types différents de particules de marqueur de fluorescence qui diffèrent les unes des autres par leur taille et/ou leur forme et/ou leur composition chimique.

3. Procédé d'identification d'un objet selon la revendication 1 ou 2, dans lequel l'objet comprend un article et/ou un revêtement, le revêtement enveloppant au moins partiellement l'article.

4. Procédé d'identification d'un objet selon l'une quelconque des revendications précédentes, dans lequel les particules de marqueur de fluorescence sont aptes à émettre, après excitation par une source infrarouge, au moins deux raies d'émission différentes dans le domaine visible et/ou dans le proche infrarouge.

5. Procédé d'identification d'un objet selon l'une quelconque des revendications précédentes, dans lequel le sous-volume est optiquement indiscernable d'au moins une partie du reste de l'objet.

6. Procédé d'identification d'un objet selon l'une quelconque des revendications précédentes, dans lequel le sous-volume est transparent, translucide ou coloré par un colorant.

7. Procédé d'identification d'un objet selon l'une quelconque des revendications 3 à 6, dans lequel le revêtement et le sous-volume sont tous deux transparents.

8. Procédé d'identification d'un objet selon l'une quelconque des revendications précédentes, dans lequel la détermination de la distribution spatiale aléatoire des particules de marqueur de fluorescence dans le sous-volume comprend la détection par capteur optique d'une émission des particules de marqueur de fluorescence.

9. Procédé d'identification d'un objet selon l'une quelconque des revendications précédentes, dans lequel l'ajustement effectué à l'étape c) comprend la conversion de la distribution spatiale aléatoire déterminée des particules de marqueur de fluorescence en un code mathématique.
